# EUROPEAN PATENT SPECIFICATION

(11) **EP 3 805 306 B1**
(45) Date of publication and mention of the grant of the patent: **27.12.2023**
(21) Application number: 19814814.0
(22) Date of filing: 05.06.2019
(51) Int. Cl.: C08L 9/00, B60C 1/00, C08K 3/013, C08K 5/098, C08K 5/24, C08K 5/30, C08C 19/22, C08K 5/29, C08C 19/44

(54) **RUBBER COMPOSITION AND TIRE**
KAUTSCHUKZUSAMMENSETZUNG UND REIFEN
COMPOSITION DE CAOUTCHOUC ET PNEU

(30) Priority: 06.06.2018 JP 2018109076
(43) Date of publication of application: 14.04.2021
(73) Proprietor: Bridgestone Corporation, Chuo-Ku Tokyo 104-8340 (JP); Otsuka Chemical Co., Ltd., Osaka-shi, Osaka 540-0021 (JP)
(72) Inventor: HAMATANI, Satoshi, Tokyo 104-8340 (JP); MATSUI, Takahiko, Tokyo 104-8340 (JP); YOSHIZAWA, Kentaro, Tokyo 104-8340 (JP); SHINOZAKI, Shinya, Tokushima-shi, Tokushima 771-0193 (JP); UENO, Mifuyu, Tokushima-shi, Tokushima 771-0193 (JP); ABE, Masaki, Tokushima-shi, Tokushima 771-0193 (JP)
(74) Representative: Marks & Clerk LLP
(86) International application number: PCT/JP2019/022334
(87) International publication number: WO 2019/235526

(56) References cited:
- EP-A1- 2 206 730
- EP-A1- 2 248 833
- EP-A1- 3 549 979
- WO-A1-2018/025966
- JP-A- H11 292 834
- JP-A- 2013 144 761
- FUKUJIRO FUJIKAWA ET AL: "Studies on Chemotherapeutics for Mycobacterium tuberculosis. XI Synthesis and Antibacterial Activity on Mycobacterium tuberculosis of p-Aminosalicyloylhydrazone", YAKUGAKU ZASSHI, vol. 78, no. 5, 1 January 1958 (1958-01-01), pages 559-561, XP055609376, DOI: 10.1248/yakushi1947.78.5_559

## Description

### TECHNICAL FIELD

This disclosure relates to a rubber composition and a tire.

### BACKGROUND

The need for fuel-efficient vehicles has been growing in recent years, and tires with low rolling resistance are in demand. Therefore, rubber compositions having low tanδ and excellent low heat generating properties are desired as rubber compositions used in tire treads and the like.

Techniques developed to realize low heat generating properties for conventional pneumatic tires include increasing the particle diameter of carbon black in a rubber composition, and decreasing the blending quantity of carbon black. However, these techniques also cause problems such as a decrease in the wear resistance of the tread rubber or a decrease in the fracture resistance of the rubber like cutting resistance and chipping resistance.

There is thus the need to develop techniques for improving the low heat generating properties without deteriorating other properties such as wear resistance.

As an example of such techniques, JP 2014-501827 A (PTL 1) describes a rubber composition in which an elastomer containing natural rubber is blended with carbon black and a specific hydrazide compound in order to improve the chemical interaction between the rubber component and the carbon black.

PTL 2 discloses hydrazone derivatives.

PTL 3 is prior art by virtue of Article 54(3) EPC only and discloses additives for rubber, a rubber composition, and a tire using the same.

NPTL 1 discloses hydrazone derivatives.

### CITATION LIST

### Patent Literature

PTL 1: JP 2014-501827 A
PTL 2: JP H11 292834 A
PTL 3: EP 3 549 979 A1

### Non-Patent Literature

NPTL 1: Fujikawa et al., Yakugaku Zasshi, 78 (5), 1958, 559-561

### SUMMARY

### (Technical Problem)

However, the technique described in PTL 1 does not sufficiently improve the low heat generating properties, and further improvement in low heat generating properties is required in order to meet the need for fuel-efficient vehicles. In addition, when the low heat generation properties are improved by the technique of PTL 1, polymer gel is formed in the rubber composition, and the processability is deteriorated (the viscosity is increased). Therefore, it is desired to further improve the processability.

It could thus be helpful to provide a rubber composition having excellent low heat generating properties, wear resistance and processability. It could also be helpful to provide a tire having excellent low heat generating properties, wear resistance and processability.

### (Solution to Problem)

We conducted extensive studies on a rubber composition containing a rubber component and a filler to solve the problems. We discovered that, by containing a hydrazide compound or a hydrazone compound having a specific structure in a rubber composition, the interaction between the rubber component and carbon black can be improved, and as a result, better low heat generating properties and wear resistance can be realized. With respect to the problem of deterioration of the processability caused by the formation of polymer gel described above, we discovered that, by further containing a plurality of fatty acid metal salts of different type of metals in the rubber composition, the processability can be improved, and excellent low heat generation properties, wear resistance, and processability can be realized at the same time. The present disclosure is based on these discoveries.

That is, the rubber composition of the present disclosure contains a rubber component containing diene rubber, a filler, at least one of compounds represented by the following formulas (I) and (II), and a plurality of fatty acid metal salts each having a different type of metal. 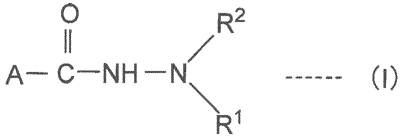 (where A is an aryl group that may have a polar group, and when A has two or more polar groups, the polar groups may be the same or different; and R¹ and R² are each at least one substituent independently selected from the group consisting of a hydrogen atom, an acyl group, an amido group, an alkyl group, a cycloalkyl group and an aryl group, and the substituent may contain at least one of O, S and N atoms.) 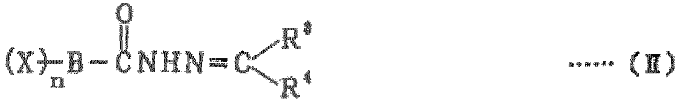 (where B is an aryl group; X is at least one substituent selected from the group consisting of a hydroxyl group and an amino group; R³ and R⁴ are at least one selected from the group consisting of a hydrogen atom, an alkyl group having 1 to 18 carbon atoms, a cycloalkyl group and an aromatic group; and n is an integer of 0 or 1 or more.)

With the above configuration, excellent low heat generation properties, wear resistance and processability can be realized.

For the rubber composition of the present disclosure, A in the compound represented by the formula (I) is preferably an aryl group having one or more polar groups and more preferably an aryl group having two or more polar groups. Further, for the rubber composition of the present disclosure, it is preferable that at least one of the polar groups of A in the compound represented by the formula (I) is a hydroxyl group, an amino group or a nitro group, more preferable that at least one of the polar groups is a hydroxyl group, and particularly preferable that at least two of the polar groups are hydroxyl groups. Because in this way, better low heat generation properties and wear resistance can be realized.

For the rubber composition of the present disclosure, A in the compound represented by the formula (I) is preferably a phenyl group or a naphthyl group. Because in this way, better low heat generation properties can be realized, and it is also advantageous in terms of practicality.

For the rubber composition of the present disclosure, it is preferable that both R¹ and R² in the compound represented by the formula (I) are hydrogen atoms. Because in this way, better low heat generation properties and wear resistance can be realized.

For the rubber composition of the present disclosure, it is preferable that the melting point of both the compounds represented by the formulas (I) and (II) is 80 °C or higher and lower than 250 °C. Because in this way, better low heat generation properties and wear resistance can be realized.

For the rubber composition of the present disclosure, it is preferable that the total content of the compounds represented by the formulas (I) and (II) is 0.05 parts by mass to 30 parts by mass with respect to 100 parts by mass of the rubber component. Because in this way, better low heat generation properties and wear resistance can be realized, and deterioration of the processability can be effectively suppressed.

For the rubber composition of the present disclosure, it is preferable that the compound represented by the formula (I) is at least one selected from the group consisting of 2,6-dihydroxybenzohydrazide, 2,3-dihydroxybenzohydrazide, 2,4-dihydroxybenzohydrazide, and 2,5-dihydroxybenzohydrazide. Because in this way, better low heat generation properties and wear resistance can be realized.

Further, for the rubber composition of the present disclosure, it is preferable that the compound represented by the formula (II) is at least one selected from the group consisting of 2,3-dihydroxy-N'-(4-methylpentane-2-ylidene) benzohydrazide, 4-amino-3-hydroxy-N'-(4-methylpentane-2-ylidene) naphthalene-2-carbohydrazide, 2,6-dihydroxy-N'-(4-methylpentane-2-ylidene) benzohydrazide, and 3-hydroxy-N'-(4-methylpentane-2-ylidene) naphthalene-2-carbohydrazide. Because in this way, better low heat generation properties and wear resistance can be realized.

For the rubber composition of the present disclosure, it is preferable that at least one of the fatty acid metal salts is fatty acid zinc, and more preferable that a content of the fatty acid zinc in the fatty acid metal salts is 50 mass% or more. Because in this way, better processability can be realized.

For the rubber composition of the present disclosure, it is preferable that a content of the fatty acid metal salts is 0.1 parts by mass to 5 parts by mass with respect to 100 parts by mass of the rubber component. Because in this way, it is possible to realize better processability while suppressing a decrease in strength and wear resistance.

For the rubber composition of the present disclosure, it is preferable that at least one of the compounds represented by the formulas (I) and (II) at least contains 2,6-dihydroxybenzohydrazide and 3-hydroxy-N'-(4-methylpentane-2-ylidene) naphthalene-2-carbohydrazide. Because in this way, better low heat generation properties and wear resistance can be realized.

The tire of the present disclosure is formed using the rubber composition described above.

With the above configuration, excellent low heat generation properties, wear resistance and processability can be realized.

### (Advantageous Effect)

According to the present disclosure, it is possible to provide a rubber composition having excellent low heat generating properties, wear resistance and processability. In addition, according to the present disclosure, it is possible to provide a tire having excellent low heat generating properties, wear resistance and processability.

### DETAILED DESCRIPTION

The following describes an embodiment of the present disclosure in detail.

### <Rubber composition>

The rubber composition of the present disclosure contains a rubber component, a filler, at least one of the compounds represented by the following formulas (I) and (II), and a plurality of fatty acid metal salts each having a different type of metal. 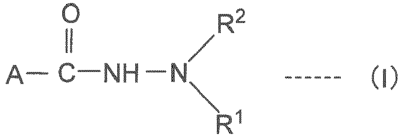 (where A is an aryl group that may have a polar group, and when A has two or more polar groups, the polar groups may be the same or different; and R¹ and R² are each at least one substituent independently selected from the group consisting of a hydrogen atom, an acyl group, an amido group, an alkyl group, a cycloalkyl group and an aryl group, and the substituent may contain at least one of O, S and N atoms.) 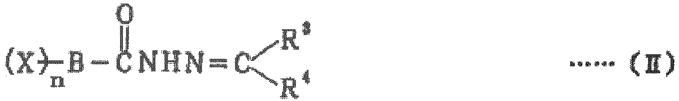 (where B is an aryl group; X is at least one substituent selected from the group consisting of a hydroxyl group and an amino group; R³ and R⁴ are at least one selected from the group consisting of a hydrogen atom, an alkyl group having 1 to 18 carbon atoms, a cycloalkyl group and an aromatic group; and n is an integer of 0 or 1 or more.)

### (Rubber component)

The rubber component contained in the rubber composition of the present disclosure contains diene rubber. Containing diene rubber can improve the wear resistance of the rubber composition.

Examples of the diene rubber include natural rubber and synthetic diene rubber such as polybutadiene rubber (BR), polyisoprene rubber (IR), styrene-butadiene copolymer rubber (SBR), styrene-isoprene-butadiene rubber (SIBR), chloroprene rubber (CR), and acrylonitrile-butadiene rubber (NBR). It is preferable to contain at least natural rubber among the above, because in this way, better low heat generating properties can be realized, and the wear resistance can be further improved.

These diene rubbers may be contained alone or in combination of two or more.

The rubber component may contain, in addition to the diene rubber described above, non-diene synthetic rubber such as ethylene-propylene-diene rubber (EPDM), ethylene-propylene rubber (EPM), and butyl rubber (IIR) as long as the effects of the present disclosure are not impaired.

The content of the diene rubber in the rubber component is not particularly limited. However, it is preferably 80 mass% or more and more preferably 90 mass% or more from the viewpoint of maintaining excellent low heat generation properties and wear resistance.

### (Filler)

The rubber composition of the present disclosure contains a filler in addition to the rubber component.

By containing a filler together with the rubber component described above and the compounds represented by the formulas (I) and (II) described below, the dispersibility of the filler is improved, the performance such as strength and wear resistance are maintained at a high level, and excellent low heat generation properties can be realized even in the case of containing a filler.

The content of the filler is not particularly limited, yet it is preferably 10 parts by mass to 160 parts by mass and more preferably 30 parts by mass to 100 parts by mass with respect to 100 parts by mass of the rubber component. This is because, when the filler is contained at an appropriate amount, better low heat generating properties and wear resistance can be realized. When the content is 10 parts by mass or more, sufficient wear resistance can be obtained. When the content is 160 parts by mass or less, deterioration of the low heat generation properties can be suppressed.

The type of the filler is not particularly limited, and it may contain, for example, carbon black, silica, and other inorganic fillers. The filler preferably contains carbon black among the above, because in this way, better low heat generating properties can be realized, and the wear resistance can be improved.

Examples of the carbon black include carbon black of GPF, FEF, SRF, HAF, ISAF, IISAF, and SAF grade.

From the viewpoint of obtaining better wear resistance, the content of the carbon black is preferably 10 parts by mass or more, more preferably 30 parts by mass or more, and further preferably 50 parts by mass or more with respect to 100 parts by mass of the rubber component. This is because, when the content of the carbon black is 10 parts by mass or more with respect to 100 parts by mass of the rubber component, the wear resistance of the rubber composition can be further improved. In addition, the content of the carbon black is preferably 160 parts by mass or less, more preferably 90 parts by mass or less, and further preferably 70 parts by mass or less with respect to 100 parts by mass of the rubber component. This is because, when the content of the carbon black is 160 parts by mass or less with respect to 100 parts by mass of the rubber component, it is possible to further improve the low heat generation properties and the processability while maintaining the wear resistance at a high level.

The silica as the filler is not particularly limited. For example, wet silica, dry silica, colloidal silica and the like may be used.

In addition, examples of the other inorganic fillers include an inorganic compound represented by the following formula (A):

nM·xSiO_{Y}·zH₂O ... (A)

(where M is at least one selected from the group consisting of metals selected from the group consisting of Al, Mg, Ti, Ca, and Zr, oxides or hydroxides of these metals, hydrates thereof, and carbonates of these metals; and n, x, y, and z are an integer of 1 to 5, an integer of 0 to 10, an integer of 2 to 5, and an integer of 0 to 10 respectively.)

Examples of the inorganic compound of the formula (A) include: alumina (Al₂O₃) such as γ-alumina and α-alumina; alumina monohydrate (Al₂O₃·H₂O) such as boehmite and diaspore; aluminum hydroxide [Al(OH)₃] such as gibbsite and bayerite; and aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O, etc.), magnesium silicate (Mg₂SiO₄, MgSiO₃, etc.), calcium silicate (Ca₂SiO₄, etc.), aluminum calcium silicate (Al₂O₃·CaO·2SiO₂, etc.), magnesium calcium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], and crystalline aluminosilicate containing hydrogen, alkali metal, or alkaline earth metal that corrects electric charge like various zeolites.

### (Compound represented by formulas (I) and (II))

The rubber composition of the present disclosure contains, in addition to the rubber component and filler described above, at least one of the compounds represented by the following formulas (I) and (II) (hereinafter, it may be abbreviated as "compounds represented by the formulas (I) and (II)"). 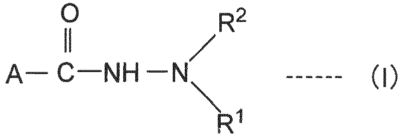 (where A is an aryl group that may have a polar group, and when A has two or more polar groups, the polar groups may be the same or different; and R¹ and R² are each at least one substituent independently selected from the group consisting of a hydrogen atom, an acyl group, an amido group, an alkyl group, a cycloalkyl group and an aryl group, and the substituent may contain at least one of O, S and N atoms.) 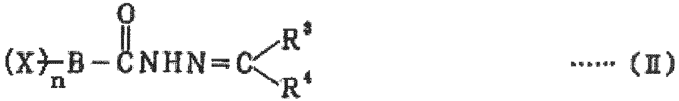 (where B is an aryl group; X is at least one substituent selected from the group consisting of a hydroxyl group and an amino group; R³ and R⁴ are at least one selected from the group consisting of a hydrogen atom, an alkyl group having 1 to 18 carbon atoms, a cycloalkyl group and an aromatic group; and n is an integer of 0 or 1 or more.)

In the compound represented by the formula (I), the aryl group represented by A has a high affinity with the filler such as carbon black, and a part having a hydrazide skeleton has a high affinity with the rubber component. Therefore, when it is blended in the rubber composition, the chemical interaction between the rubber component and the filler can be greatly improved. In this way, hysteresis loss caused by the rubbing of the fillers can be reduced, and as a result, extremely excellent low heat generation properties can be obtained as compared with conventional ones. In addition, the dispersibility of the filler is improved, thereby realizing better wear resistance.

Examples of the aryl group represented by A in the compound represented by the formula (I) include aromatic hydrocarbon groups such as a phenyl group, a naphthyl group, an anthryl group, a phenanthryl group, and a triphenylenyl group, and nitrogen-containing heterocyclic groups such as a pyridyl group and a benzoimidazolyl group. The aryl group is preferably a phenyl group or a naphthyl group and more preferably a phenyl group among the above. Because it exhibits an excellent affinity with the filler, better low heat generation properties and wear resistance can be realized, and because it reduces the number of aromatic rings, it is advantageous in terms of cost and practicality.

When the aryl group represented by A in the compound represented by the formula (I) has a polar group, the number of the polar group is 1 or more, more preferably 2 or more, still more preferably 2 to 5, and particularly preferably 2 or 3. This is because having a polar group in the aromatic ring renders it possible to obtain a high affinity with the filler such as carbon black.

The type of the polar group is not particularly limited, and examples thereof include an amino group, an imino group, a nitrile group, an ammonium group, an imido group, an amido group, a hydrazo group, an azo group, a diazo group, a hydroxyl group, a carboxy group, a carbonyl group, an epoxy group, an oxycarbonyl group, a nitrogen-containing heterocyclic group, an oxygen-containing heterocyclic group, a tin-containing group, an alkoxysilyl group, an alkylamino group, and a nitro group. Among the above, it is preferable that at least one of the polar groups is a hydroxyl group, an amino group or a nitro group, more preferable that at least one of the polar groups is a hydroxyl group, and particularly preferable that at least two of the polar groups are hydroxyl groups. Because in this way, a better affinity with the filler is exhibited, and the low heat generation properties and the wear resistance of the rubber composition can be further improved.

The position of the polar group in the aryl group is not particularly limited, yet it is preferably in an ortho position with respect to the hydrazide skeleton.

Further, with respect to the hydrazide group connected to the A in the compound represented by the formula (1), R¹ and R² are each at least one substituent independently selected from the group consisting of a hydrogen atom, an acyl group, an amido group, an alkyl group, a cycloalkyl group and an aryl group, and these substituents may contain at least one of O, S and N atoms.

Furthermore, it is preferable that R¹ and R² are a hydrogen atom or an alkyl group and more preferable that both R¹ and R² are hydrogen atoms among the above-mentioned substituents. Because in this way, a high affinity with the rubber component is provided, and better low heat generation properties and wear resistance can be obtained.

Some suitable examples of the compound represented by the formula (I) described above are listed below. Using these compounds can further improve the low heat generation properties of the rubber composition. These compounds may be used alone or in combination of two or more. 2,6-dihydroxybenzohydrazide 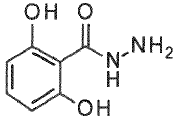 2,3-dihydroxybenzohydrazide 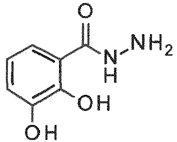 2,4-dihydroxybenzohydrazide 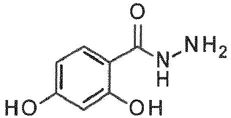 2,5-dihydroxybenzohydrazide 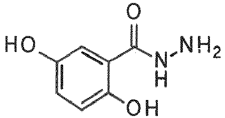 4-amino-2-hydroxybenzohydrazide 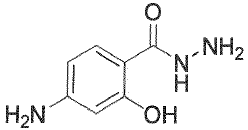 3,5-dihydroxynaphthalene-2-carbohydrazide 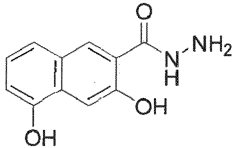 4-amino-3-hydroxynaphthalene-2-carbohydrazide 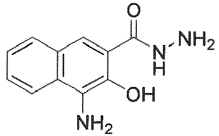 3-hydroxy-4-nitronaphthalene-2-carbohydrazide 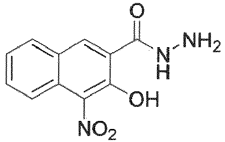 1,3-dihydroxynaphthalene-2-carbohydrazide 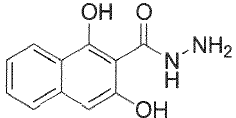 2,4,6-trihydroxybenzohydrazide 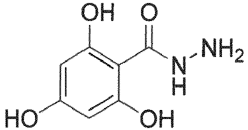 2,6-dihydroxy-4-methylbenzohydrazide 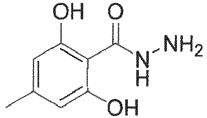 3-hydroxy-2-naphthoic acid hydrazide

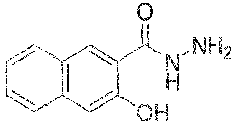

Among the above-mentioned compounds, the compound represented by the formula (I) is preferably at least one selected from the group consisting of 3-hydroxy-2-naphthoic acid hydrazide, 2,6-dihydroxybenzohydrazide, 2,3-dihydroxybenzohydrazide, 2,4-dihydroxybenzohydrazide, and 2,5-dihydroxybenzohydrazide, and is more preferably 3-hydroxy-2-naphthoic acid hydrazide, 2,6-dihydroxybenzohydrazide, or 2,3-dihydroxybenzohydrazide. Because in this way, better low heat generation properties and wear resistance can be obtained.

The compound represented by the formula (II) has an effect of suppressing an increase in viscosity while maintaining low heat generation of rubber. In addition, a part of the compound represented by the formula (II) having a hydrazone skeleton has a high affinity with the rubber component, like the compound represented by the formula (I) described above. Therefore, when it is blended in the rubber composition, the chemical interaction between the rubber component and the filler can be greatly improved. In this way, hysteresis loss caused by the rubbing of the fillers can be reduced, and as a result, extremely excellent low heat generation properties can be obtained. Further, the dispersibility of the filler is improved, thereby realizing better wear resistance.

In the compound represented by the formula (II), B is an aryl group, and X is at least one substituent selected from the group consisting of a hydroxyl group and an amino group. The aryl group represented by B may have a high affinity with the filler such as carbon black.

Examples of the aryl group represented by B include aromatic hydrocarbon groups such as a phenyl group, a naphthyl group, an anthryl group, a phenanthryl group, and a triphenylenyl group. In addition, examples of the substituent represented by X include a hydroxyl group and an amino group.

The number (n) of the substituent X on the aryl group represented by B in the compound represented by the formula (II) is 0 or 1 or more, preferably 1 or more, more preferably 1 to 5, and further preferably 1 to 3. This is because having one or more substituents in the aromatic ring renders it possible to obtain a high affinity with the filler such as carbon black.

Further, in the compound represented by the formula (II), R³ and R⁴ are at least one selected from a hydrogen atom, an alkyl group having 1 to 18 carbon atoms, a cycloalkyl group, and an aromatic group (substituted at ortho, meta or para positions).

Some suitable examples of the compound represented by the formula (II) described above are listed below. Using these compounds can further improve the low heat generation properties of the rubber composition. These compounds may be used alone or in combination of two or more. 2,3-dihydroxy-N'-(4-methylpentane-2-ylidene) benzohydrazide 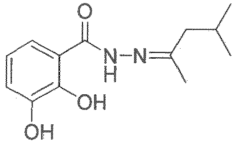 4-amino-3-hydroxy-N'-(4-methylpentane-2-ylidene) naphthalene-2-carbohydrazide 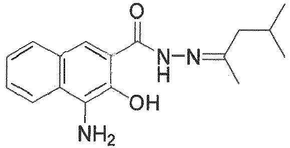 2,6-dihydroxy-N'-(4-methylpentane-2-ylidene) benzohydrazide 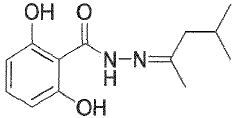 2,6-dihydroxy-4-methyl-N'-(4-methylpentane-2-ylidene) benzohydrazide 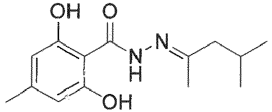 1,3-dihydroxy-N'-(4-methylpentane-2-ylidene) naphthalene-2-carbohydrazide 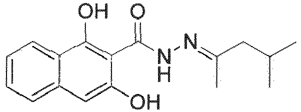 2,4,6-trihydroxy-N'-(4-methylpentane-2-ylidene) benzohydrazide 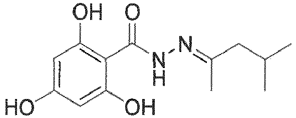 3-hydroxy-N'-(4-methylpentane-2-ylidene) naphthalene-2-carbohydrazide

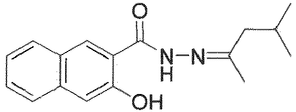

Among the above-mentioned compounds, the compound represented by the formula (II) is preferably at least one selected from the group consisting of 3-hydroxy-N'-(4-methylpentane-2-ylidene) naphthalene-2-carbohydrazide, 2,6-dihydroxy-N'-(4-methylpentane-2-ylidene) benzohydrazide, 2,3-dihydroxy-N'-(4-methylpentane-2-ylidene) benzohydrazide and 4-amino-3-hydroxy-N'-(4-methylpentane-2-ylidene) naphthalene-2-carbohydrazide, from the viewpoints of ease of synthesis and further improvement in the low heat generation properties.

Note that 2,6-dihydroxy-4-methyl-N'-(4-methylpentane-2-ylidene) benzohydrazide, 1,3-dihydroxy-N'-(4-methylpentane-2-ylidene) naphthalene-2-carbohydrazide, and 2,4,6-trihydroxy-N'-(4-methylpentane-2-ylidene) benzohydrazide are novel compounds that have not been disclosed in the literature or the like.

The melting point of both the compounds represented by the formulas (I) and (II) is preferably 80 °C or higher and lower than 250 °C and more preferably 80 °C to 230 °C. This is because, by lowering the melting points of the compounds represented by the formulas (I) and (II), the affinity with all molecules of the diene rubber is increased, better low heat generation properties can be obtained, and the wear resistance can also be improved.

The total content of the compounds represented by the formulas (I) and (II) in the rubber composition of the present disclosure is preferably 0.05 parts by mass to 30 parts by mass, more preferably 0.05 parts by mass to 10 parts by mass, and particularly preferably 0.05 parts by mass to 5 parts by mass with respect to 100 parts by mass of the rubber component. This is because, when the content is 0.05 parts by mass or more with respect to 100 parts by mass of the rubber component, better low heat generation properties and wear resistance can be obtained; and when the content is 30 parts by mass or less, deterioration of the processability can also be prevented.

It is required to contain at least one of the compounds represented by the formulas (I) and (II) in the rubber composition of the present disclosure. However, from the viewpoint of obtaining better low heat generation properties and wear resistance, it is preferable to contain both the compounds represented by the formulas (I) and (II).

Excellent low heat generation properties and wear resistance can be obtained in the case of containing either of the compounds represented by the formulas (I) and (II), so that it is possible to appropriately select according to the required performance. However, from the viewpoint of further improving the low heat generation properties and wear resistance, it is preferable to contain at least the compound represented by the formula (I).

Further, from the viewpoint of obtaining better low heat generation properties and wear resistance, the rubber composition of the present disclosure preferably contains at least 2,6-dihydroxybenzohydrazide of the compound represented by the formula (I) and 3-hydroxy-N'-(4-methylpentane-2-ylidene) naphthalene-2-carbohydrazide of the compound represented by the formula (II).

Since all of the above-mentioned compounds have an effect of improving the interaction between the rubber component and the carbon black, better low heat generation properties and wear resistance can be realized by a multiplier effect.

### (Fatty acid metal salt)

The rubber composition of the present disclosure further contains a plurality of fatty acid metal salts each having a different type of metal in addition to the rubber component, filler, and compounds represented by the formulas (I) and (II) described above.

Although containing the compounds represented by the formulas (I) and (II) can greatly improve the chemical interaction between the rubber component and the filler, it causes generation of polymer gel and deteriorates the processability. Therefore, in the present disclosure, a plurality of fatty acid metal salts each having a different type of metal are further contained in the rubber composition as processing aids. In this way, it is possible to improve the processability while maintaining excellent low heat generation properties and wear resistance. Further, a plurality of fatty acid metal salts each having a different type of metal are contained as the fatty acid metal salts in the present disclosure, and this can decrease the possibility that only one of the processability and the low heat generation properties is improved and the other is deteriorated. As a result, both the processability and the low heat generation properties can be realized at a high level.

The types of the fatty acid metal salts are not particularly limited as long as the type of each metal is different, and known fatty acid metal salts can be appropriately selected and used.

From the viewpoint of obtaining good processability, it is preferable to use a saturated or unsaturated fatty acid having 3 to 30, preferably 6 to 20 carbon atoms as the fatty acid of the fatty acid metal salt. Examples thereof include lauric acid, myristic acid, palmitic acid, stearic acid, oleic acid, linoleic acid, and carboxylic acid.

The fatty acids of the fatty acid metal salts used in the present disclosure may be of the same type or two or more types.

In addition, the metal of the fatty acid metal salt is not particularly limited. The metal is, for example, preferably at least two selected from the group consisting of Na, K, Ca, Mg, Al and Zn, where at least one of the at least two is more preferably Zn (fatty acid zinc). Because in this way, better processability can be obtained.

The content (total content) of the fatty acid metal salts is preferably 0.1 parts by mass to 5 parts by mass and more preferably 0.5 parts by mass to 3 parts by mass with respect to 100 parts by mass of the rubber component. When the content of the fatty acid metal salts is 0.1 parts by mass or more with respect to 100 parts by mass of the rubber component, the effect of improving the processability can be obtained more reliably. When the content of the fatty acid metal salts is 5 parts by mass or less with respect to 100 parts by mass of the rubber component, deterioration of the strength and the wear resistance can be suppressed.

In the case where fatty acid zinc is contained as the fatty acid metal salt, the content of the fatty acid zinc in the fatty acid metal salts is preferably 30 mass% or more and more preferably 50 mass% or more. Because in this way, the effect of improving the processability can be obtained more reliably. In addition, the content of the fatty acid zinc in the fatty acid metal salts is preferably 95 mass% or less and more preferably 90 mass% or less so as not to deteriorate the low heat generation properties.

### (Other components)

In addition to the rubber component, the filler, the compounds represented by the formulas (I) and (II) and the plurality of fatty acid metal salts each having a different type of metal, the rubber composition of the present disclosure may also contain compounding agents commonly used in the rubber industry, which are selected as appropriate within a range in which the object of the present disclosure is not hampered. Examples of the compounding agents include an antioxidant, a softener, a silane coupling agent, a zinc oxide, a vulcanization accelerator, and a vulcanizing agent. Commercial products may be suitably used as these compounding agents.

The production method of the rubber composition of the present disclosure is not particularly limited. For example, the rubber composition can be obtained by blending and kneading the rubber component containing diene rubber, the filler, the compounds represented by the formulas (I) and (II), the plurality of fatty acid metal salts each having a different type of metal, and other components optionally used with a known method.

### (Tire)

The tire of the present disclosure is formed using the rubber composition of the present disclosure described above. With the inclusion of the rubber composition of the present disclosure having excellent low heat generation properties, wear resistance and processability as a tire material, excellent low heat generation properties, wear resistance and processability can be realized.

The part in which the rubber composition is used is not particularly limited, yet it is preferably used in a tread of the tire. A tire using the rubber composition of the present disclosure in its tread has excellent low heat generation properties and wear resistance.

The tire of the present disclosure is not particularly limited as long as the rubber composition of the present disclosure described above is used in any of its tire members, and the tire of the present disclosure can be produced according to a conventional method. Gas with which the tire is filled may be inert gas such as nitrogen, argon and helium, as well as normal air or air whose oxygen partial pressure has been adjusted.

### EXAMPLES

The following describes the present disclosure in more detail with reference to examples, yet the present disclosure is not limited to the following examples.

### (Compounds a to i)

Compounds a to i were prepared. The type, melting point, and ¹H-NMR measurement result (conditions: 300 MHz, DMSO-d₆, δppm) of the compounds a to i are listed below.

### - Compound a: 2,6-dihydroxybenzohydrazide

First, 5.29 g of methyl 2,6-dihydroxybenzoate and 3.30 g of 100 % hydrazine monohydrate were added to 32 mL of 1-butanol and stirred at 117 °C for 15 hours. The reaction solution was cooled, and then the precipitated solid was filtered and washed with isopropyl alcohol. The obtained solid was dried under reduced pressure to obtain 2.85 g (yield 54 %) of a pale yellow solid 2,6-dihydroxybenzohydrazide (corresponding to the compound represented by the formula (I)). 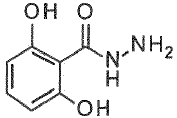 (Melting point: 198 °C, ¹H-NMR (300MHz, DMSO-d₆, δppm): 6.3 (d, 2H), 7.1 (t, 1H), NH(3H) and OH(2H) were not detected.)

### - Compound b: 2,3-dihydroxybenzohydrazide

First, 2.75 g of methyl 2,3-dihydroxybenzoate and 7.00 g of 100 % hydrazine monohydrate were added to 1.5 mL of water and stirred at 100 °C for 3 hours. The reaction solution was concentrated, and then the precipitated solid was added with isopropyl alcohol, filtered, and washed with isopropyl alcohol. The obtained solid was dried under reduced pressure to obtain 2.00 g (yield 73 %) of a pale yellow solid 2,3-dihydroxybenzohydrazide (corresponding to the compound represented by the formula (I)). 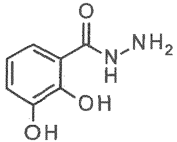 (Melting point: 223 °C, ¹H-NMR (300MHz, DMSO-d₆, δppm): 4.7 (br-s, 2H), 6.7 (m, 1H), 6.9 (m, 1H), 7.2 (m, 1H), 10.1 (br-s, 1H), OH(2H) was not detected.)

### - Compound c: 2,3-dihydroxy-N'-(4-methylpentane-2-ylidene) benzohydrazide

First, 1.20 g of 2,3-dihydroxybenzohydrazide and 3.00 g of methyl isobutyl ketone were added to 10.0 mL of methanol and stirred at 65 °C for 12 hours. The reaction solution was concentrated, and the precipitated solid was added with diisopropyl ether, filtered, and further washed with diisopropyl ether. The obtained solid was dried under reduced pressure to obtain 1.61 g (yield 90 %) of a pale yellow solid 2,3-dihydroxy-N'-(4-methylpentane-2-ylidene) benzohydrazide (corresponding to the compound represented by the formula (II)). 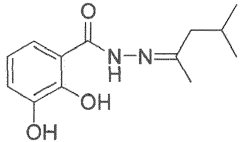 (Melting point: 138 °C, ¹H-NMR (300MHz, DMSO-d₆, δppm): 0.91 (m, 6H), 2.0 (m, 4H), 2.2 (m, 2H), 6.8 (m, 1H), 7.0 (m, 1H), 7.4 (m, 1H), 9.6 (m, 1H), 10.9 (m, 1H), 11.2 (m, 1H)).)

### - Compound d: 4-amino-3-hydroxy-N'-(4-methylpentane-2-ylidene) naphthalene-2-carbohydrazide

First, 39.7 g of 4-amino-3-hydroxy-2-naphthoic acid hydrazide and 36.6 g of methyl isobutyl ketone were added to 183 mL of methanol and stirred at 65 °C for 3 hours. The reaction solution was cooled, and the precipitated solid was filtered and washed with isopropyl alcohol. The obtained solid was dried under reduced pressure to obtain 52.1 g (yield 95 %) of a pale yellow solid 4-amino-3-hydroxy-N'-(4-methylpentane-2-ylidene) naphthalene-2-carbohydrazide (corresponding to the compound represented by the formula (II)). 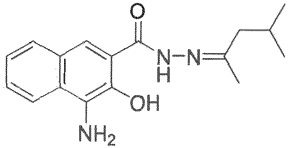 (Melting point: 166 °C, ¹H-NMR (300MHz, DMSO-d₆, δppm): 0.93 (m, 6H), 2.0 (m, 4H), 2.2 (m, 2H), 7.3 (m, 2H), 7.4 (m, 2H), 7.8 (m, 2H), 8.0 (m, 1H), 11.1 (m, 1H), NH(2H) was not detected.)

### - Compound e: 3-hydroxy-N'-(4-methylpentane-2-ylidene) naphthalene-2-carbohydrazide

A reactor having a Dean-Stark reflux condenser and a stirrer was charged with 400 g of methyl isobutyl ketone and 50.5 g (0.25 mol) of 3-hydroxy-2-naphthoic acid hydrazide, and then the charged materials were heated and refluxed for 5 hours while removing distilled water. The reaction solution was cooled to 20 °C, and then the precipitated crystals were filtered and dried under reduced pressure to obtain slight yellow crystals 3-hydroxy-N'-(4-methylpentane-2-ylidene) naphthalene-2-carbohydrazide (corresponding to the compound represented by the formula (II)) (67.6 g, yield 95 %). 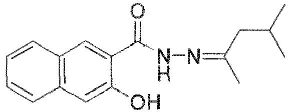
Melting point: 146 °C
¹H-NMR (DMSO): 0.90 (m, 6H), 1.93 (s, 3H), 2.00 (m, 1H), 2.17 (m, 2H), 7.38 (m, 2H), 7.46 (m, 1H), 7.75 (m, 1H), 7.95 (m, 1H), 8.58 (m, 1H), 11.15 (b, 1H), 11.65 (b, 1H)

### - Compound f: 2,6-dihydroxy-N'-(4-methylpentane-2-ylidene) benzohydrazide

First, 1.20 g of 2,6-dihydroxybenzohydrazide and 3.96 g of methyl isobutyl ketone were added to 10.0 mL of methanol and stirred at 65 °C for 18 hours. The reaction solution was concentrated, and the precipitated solid was filtered and then washed with diisopropyl ether. The obtained solid was dried under reduced pressure to obtain 1.63 g (yield 91 %) of a pale yellow solid 2,6-dihydroxy-N'-(4-methylpentane-2-ylidene) benzohydrazide (corresponding to the compound represented by the formula (II)). 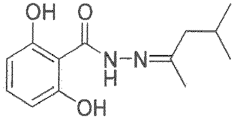
Melting point: 174 °C
¹H-NMR (300MHz, DMSO-d₆, δppm): 0.92 (m, 6H), 2.0 (m, 4H), 2.2 (m, 2H), 7.2 (t, 1H), 11.5 (m, 1H), 12.8 (m, 2H))

### - Compound g: 2,6-dihydroxy-4-methyl-N'-(4-methylpentane-2-ylidene) benzohydrazide

First, 8.00 g of methyl isobutyl ketone was added to 2.00 g of 2,6-dihydroxy-4-methylbenzohydrazide, and the mixture was stirred at room temperature for 48 hours. The reaction solution was added with ethyl acetate and hexane, and the precipitated solid was filtered and then washed with hexane. The obtained solid was dried under reduced pressure to obtain 2.57 g (yield 89 %) of a reddish brown solid 2,6-dihydroxy-4-methyl-N'-(4-methylpentane-2-ylidene) benzohydrazide (corresponding to the compound represented by the formula (II)). 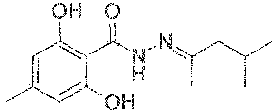
Melting point: 168 °C
¹H-NMR (300MHz, DMSO-d₆, δppm): 0.9 (m, 6H), 1.9 (m, 4H), 2.2 (m, 5H), 6.2 (s, 2H), 11.4 (m, 1H), 12.7 (br-s, 2H)

### - Compound h: 1,3-dihydroxy-N'-(4-methylpentane-2-ylidene) naphthalene-2-carbohydrazide

First, 10.0 g of methyl isobutyl ketone was added to 2.00 g of 1,3-dihydroxynaphthalene-2-carbohydrazide, the mixture was stirred at room temperature for 12 hours, then 20 mL of methanol was added to the mixture, and the mixture was further stirred for 12 hours. The precipitated solid was filtered and then washed with methanol. The obtained solid was dried under reduced pressure to obtain 2.29 g (yield 83 %) of a pale yellow solid 1,3-dihydroxy-N'-(4-methylpentane-2-ylidene) naphthalene-2-carbohydrazide (corresponding to the compound represented by the formula (II)). 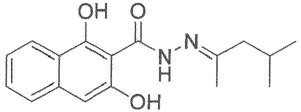
Melting point: 191 °C
¹H-NMR (300MHz, DMSO-d₆, δppm): 0.9 (m, 6H), 2.0 (m, 4H), 2.2 (m, 2H), 6.7 (br-s, 1H), 7.3 (m, 1H), 7.5 (m, 1H), 7.6 (m, 1H), 8.1 (m, 1H), 11.6 (m, 1H), 12.0 (br-s, 1H), 15.3 (br-s, 1H)

### - Compound i: 2,4,6-trihydroxy-N'-(4-methylpentane-2-ylidene) benzohydrazide

At room temperature, 40.0 g of methyl isobutyl ketone was added to 6.00 g of 4-tert-butyldimethylsilyloxy-2,6-dihydroxybenzohydrazide, and the mixture was stirred at room temperature for 24 hours. The reaction solution was purified by silica gel column chromatography, and the obtained solid was washed with a mixed solvent of hexane and ethyl acetate to obtain 6.10 g (yield 80 %) of a white solid 4-tert-butyldimethylsilyloxy-2,6-dihydroxy-N'-(4-methylpentane-2-ylidene) benzohydrazide.

At room temperature, 20 mL of N, N-dimethylformamide and 610 mg of potassium fluoride were added to 2.00 g of 4-tert-butyldimethylsilyloxy-2,6-dihydroxy-N'-(4-methylpentane-2-ylidene) benzohydrazide, and the reaction suspension was stirred for 2 hours. The reaction suspension was added with 100 mL of water and 100 mL of saturated brine, and the mixture was ice-cooled and stirred for 30 minutes. After that, the precipitated solid was filtered and washed with water. The obtained solid was dried under reduced pressure to obtain 100 mg (yield 7.2 %) of a pale yellow solid 2,4,6-trihydroxy-N'-(4-methylpentane-2-ylidene) benzohydrazide (corresponding to the compound represented by the formula (II)). 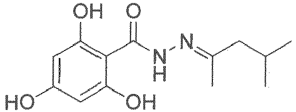
Melting point: 223 °C
¹H-NMR (300MHz, DMSO-d₆, δppm): 0.9 (d, 6H), 1.8 (s, 3H), 1.9 (m, 1H), 2.1 (d, 2H), 5.5 (br-s, 2H), 9.4 (br-s, 1H), 13.5 (br-s, 2H)

### <Example 1>

Samples 1 to 44 of rubber compositions (Samples 1 to 32 were examples of the present disclosure, and Samples 33 to 44 were comparative examples) were prepared according to the chemical compositions listed in Table 1. The blending quantity of each component is indicated in parts by mass with respect to 100 parts by mass of the rubber component.

### <Example 2>

Samples 45 to 77 of rubber compositions (Samples 45 to 71 were examples of the present disclosure, and Samples 72 to 77 were comparative examples) were prepared according to the chemical compositions listed in Table 1. The blending quantity of each component is indicated in parts by mass with respect to 100 parts by mass of the rubber component.

### <Evaluation>

The following evaluation was performed on the obtained samples of rubber compositions.

### (1) Processability evaluation (Mooney viscosity index)

The Mooney viscosity of each sample of rubber composition was measured in accordance with JIS K 6300-1: 2001 (Mooney viscosity, Mooney scorch time).

The reciprocal of the measured Mooney viscosity was obtained. Table 1 lists the index values taking the reciprocal value of the Mooney viscosity of Sample 33 as 100, and Table 2 lists the index values taking the reciprocal value of the Mooney viscosity of Sample 72 as 100. The larger the obtained index value is, the smaller the unvulcanized viscosity is, the better the processability is. The evaluation results are listed in Tables 1 and 2.

### (2) Low heat generation properties (tanδ index)

Each sample of rubber composition was vulcanized at 145 °C for 33 minutes to obtain a vulcanized rubber. The loss tangent (tanδ) of the obtained vulcanized rubber was measured at a temperature of 50 °C, a strain of 5 %, and a frequency of 15 Hz using a viscoelasticity meter [manufactured by Rheometrics Inc.].

The reciprocal of the measured tanδ was obtained. Table 1 lists the index values taking the reciprocal value of the tanδ of Sample 33 as 100, and Table 2 lists the index values taking the reciprocal value of the tanδ of Sample 72 as 100. The larger the obtained index value is, the better the low heat generation properties are. The evaluation results are listed in Tables 1 and 2.

### (3) Wear resistance (wear index)

Each sample of rubber composition was vulcanized at 145 °C for 33 minutes to obtain a vulcanized rubber. A test piece in a disk shape (diameter 16.2 mm × thickness 6 mm) was cut out from each of the obtained vulcanized rubbers, the test piece was used to perform a DIN wear test according to JIS-K6264-2: 2005, and the wear amount (mm³) when the DIN wear test was performed at room temperature was measured.

With respect to the measured wear amount of each sample, Table 1 lists the reciprocal of the wear amount of each sample as an index, taking the reciprocal of the wear amount of Sample 33 as 100; and Table 2 lists the reciprocal of the wear amount of each sample as an index, taking the reciprocal of the wear amount of Sample 72 as 100. The larger the obtained index value is, the smaller the wear amount is, the better the wear resistance is. The evaluation results are listed in Tables 1 and 2.

### (4) Total of evaluation values

The total of the index values obtained by the evaluations (1) to (3) was calculated. The calculation results are listed in Tables 1 and 2.

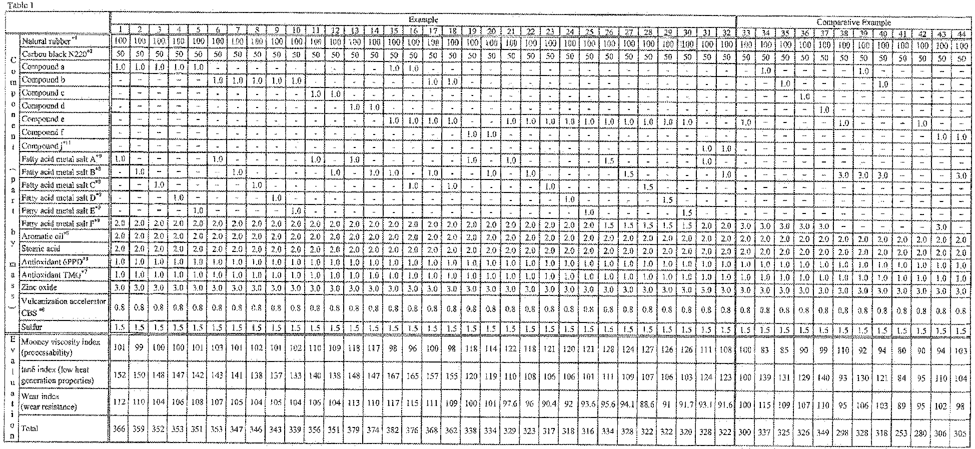

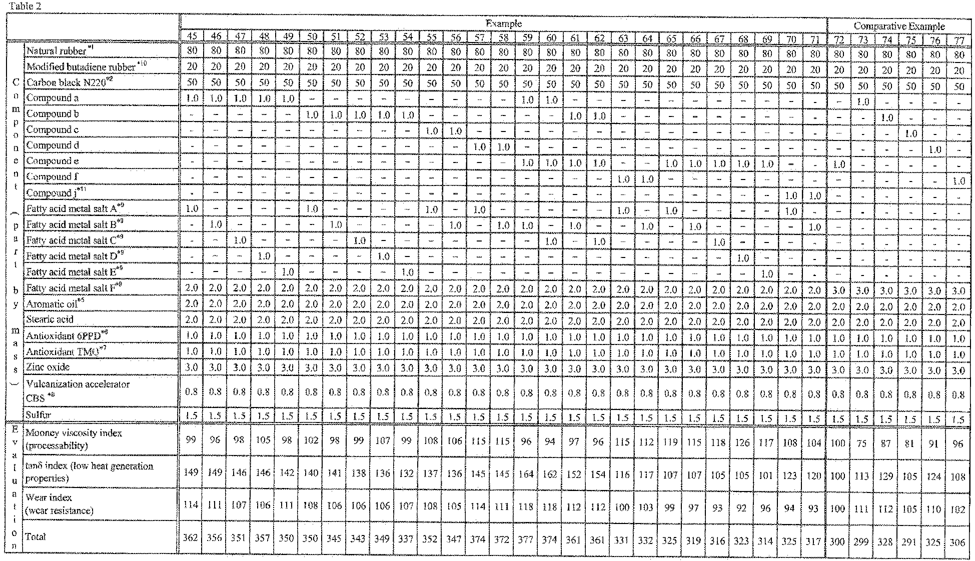

*1: RSS #1
*2: "#80" manufactured by Asahi Carbon Co., Ltd
*5: "A/O MIX" manufactured by SANKYO YUKA KOGYO K.K.
*6: N-phenyl-N'-(1,3-dimethylbutyl)-p-phenylenediamine, "NOCRAC 6C" manufactured by Ouchi Shinko Chemical Industrial Co., Ltd.
*7: 2,2,4-trimethyl-1,2-dihydroquinoline polymer, "NOCRAC 224" manufactured by Ouchi Shinko Chemical Industrial Co., Ltd.
*8: N-cyclohexyl-2-benzothiazolesulfenamide, "Sanceler CM" manufactured by Sanshin Chemical Industry Co., Ltd.
*9: fatty acid metal salt A is "sodium stearate", fatty acid metal salt B is "potassium stearate", fatty acid metal salt C is "calcium stearate", fatty acid metal salt D is "magnesium stearate", fatty acid metal salt E is "aluminum stearate", and fatty acid metal salt F is "zinc stearate", all of which are manufactured by Tokyo Chemical Industry Co., Ltd.
*10: The modified butadiene rubber was obtained with the following polymerization method.

In a pressure-resistant glass vessel with an internal volume of about 900 mL that had been dried and purged with nitrogen, 283 g of cyclohexane, 50 g of 1,3-butadiene monomer, 0.0057 mmol of 2,2-ditetrahydrofurylpropane, and 0.513 mmol of hexamethyleneimine were injected respectively as cyclohexane solutions. After adding 0.57 mmol of n-butyllithium (BuLi) to the mixture, polymerization was carried out for 4.5 hours in a warm water bath at 50 °C equipped with a stirrer. The polymerization conversion rate was almost 100 %. As a cyclohexane solution, 0.100 mmol of tin tetrachloride was added to the polymerization system, and the mixture was stirred at 50 °C for 30 minutes. After that, 0.5 mL of an isopropanol 5 % solution of 2,6-di-t-butylparacresol (BHT) was further added to terminate the reaction. Further, drying was performed according to a conventional method to obtain a modified butadiene rubber. The vinyl bond amount of the butadiene part was 14 %, and the coupling efficiency was 65 %.

*11: 3-hydroxy-2-naphthoic acid hydrazide, manufactured by Tokyo Chemical Industry Co., Ltd.

From the results of Tables 1 and 2, it is understood that each sample of the examples of the present disclosure is well-balanced and excellent in all evaluation items as compared with each sample of the comparative examples using the same type of compounds (compounds a to f, and j), and the samples of the examples of the present disclosure can realize high-level processability, low heat generation properties and wear resistance at the same time.

### INDUSTRIAL APPLICABILITY

According to the present disclosure, it is possible to provide a rubber composition having excellent low heat generating properties, wear resistance and processability. In addition, according to the present disclosure, it is possible to provide a tire having excellent low heat generating properties, wear resistance and processability.

## Claims

1. A rubber composition comprising
a rubber component containing diene rubber,
a filler,
at least one of compounds represented by the following formulas (I) and (II), and
a plurality of fatty acid metal salts each having a different type of metal, wherein 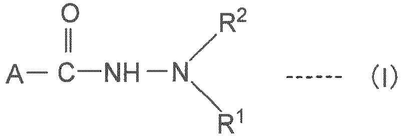 in the formula (I), A is an aryl group that may have a polar group, and when A has two or more polar groups, the polar groups may be the same or different; and R¹ and R² are each at least one substituent independently selected from the group consisting of a hydrogen atom, an acyl group, an amido group, an alkyl group, a cycloalkyl group and an aryl group, and the substituent may contain at least one of O, S and N atoms, and 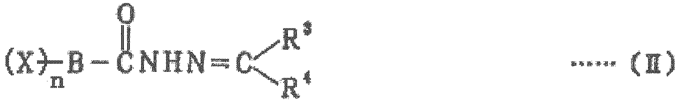 in the formula (II), B is an aryl group; X is at least one substituent selected from the group consisting of a hydroxyl group and an amino group; R³ and R⁴ are at least one selected from the group consisting of a hydrogen atom, an alkyl group having 1 to 18 carbon atoms, a cycloalkyl group and an aromatic group; and n is an integer of 0 or 1 or more.

2. The rubber composition according to claim 1, wherein A in the compound represented by the formula (1) is an aryl group having one or more polar groups.

3. The rubber composition according to claim 2, wherein A in the compound represented by the formula (I) is an aryl group having two or more polar groups.

4. The rubber composition according to any one of claims 1 to 3, wherein at least one of the polar groups of A in the compound represented by the formula (I) is a hydroxyl group, an amino group or a nitro group.

5. The rubber composition according to claim 4, wherein at least one of the polar groups of A in the compound represented by the formula (I) is a hydroxyl group.

6. The rubber composition according to claim 5, wherein at least two of the polar groups of A in the compound represented by the formula (I) are hydroxyl groups.

7. The rubber composition according to any one of claims 1 to 6, wherein A in the compound represented by the formula (I) is a phenyl group or a naphthyl group.

8. The rubber composition according to any one of claims 1 to 7, wherein both R¹ and R² in the compound represented by the formula (I) are hydrogen atoms.

9. The rubber composition according to any one of claims 1 to 8, wherein the compounds represented by the formulas (I) and (II) both have a melting point of 80 °C or higher and lower than 250 °C.

10. The rubber composition according to any one of claims 1 to 9, wherein a total content of the compounds represented by the formulas (I) and (II) is 0.05 parts by mass to 30 parts by mass with respect to 100 parts by mass of the rubber component.

11. The rubber composition according to any one of claims 1 to 10, wherein the compound represented by the formula (I) is at least one selected from the group consisting of 2,6-dihydroxybenzohydrazide, 2,3-dihydroxybenzohydrazide, 2,4-dihydroxybenzohydrazide, and 2,5-dihydroxybenzohydrazide.

12. The rubber composition according to any one of claims 1 to 11, wherein the compound represented by the formula (II) is at least one selected from the group consisting of 2,3-dihydroxy-N'-(4-methylpentane-2-ylidene) benzohydrazide, 4-amino-3-hydroxy-N'-(4-methylpentane-2-ylidene) naphthalene-2-carbohydrazide, and 3-hydroxy-N'-(4-methylpentane-2-ylidene) naphthalene-2-carbohydrazide.

13. The rubber composition according to any one of claims 1 to 12, wherein at least one of the fatty acid metal salts is fatty acid zinc.

14. The rubber composition according to claim 13, wherein a content of the fatty acid zinc in the fatty acid metal salts is 50 mass% or more.

15. The rubber composition according to any one of claims 1 to 14, wherein a content of the fatty acid metal salts is 0.1 parts by mass to 5 parts by mass with respect to 100 parts by mass of the rubber component.

16. The rubber composition according to any one of claims 1 to 10 and 13 to 15, wherein at least one of the compounds represented by the formulas (I) and (II) at least contains 2,6-dihydroxybenzohydrazide and 3-hydroxy-N'-(4-methylpentane-2-ylidene) naphthalene-2-carbohydrazide.

17. A tire using the rubber composition according to any one of claims 1 to 16,

## Patentansprüche

1. Kautschukzusammensetzung, Folgendes umfassend:
eine Kautschukkomponente, die einen dienhaltigen Kautschuk beinhaltet,
einen Füllstoff,
mindestens eine der Verbindungen, dargestellt durch die folgenden Formeln (I) und (II), und
eine Vielzahl von Fettsäuremetallsalzen, die jeweils eine andere Art von Metall aufweisen, wobei 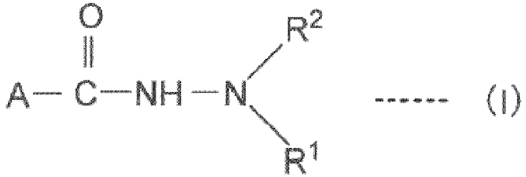
in der Formel (I) A eine Arylgruppe ist, die eine polare Gruppe besitzen kann, und wenn A zwei oder mehr polare Gruppen besitzt, die polaren Gruppen gleich oder verschieden sein können; und R¹ und R² jeweils mindestens ein Substituent sind, der unabhängig aus der Gruppe ausgewählt ist, bestehend aus einem Wasserstoffatom, einer Acylgruppe, einer Amidogruppe, einer Alkylgruppe, einer Cycloalkylgruppe und einer Arylgruppe, und der Substituent mindestens eines der Atome O, S und N enthalten kann, und 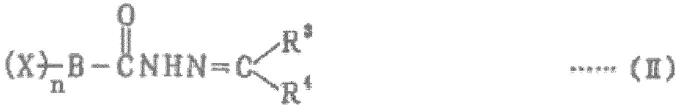
in der Formel (II) B eine Arylgruppe ist; X mindestens ein Substituent ist, ausgewählt aus der Gruppe, bestehend aus einer Hydroxylgruppe und einer Aminogruppe; R³ und R⁴ mindestens eines ist, ausgewählt aus der Gruppe, bestehend aus einem Wasserstoffatom, einer Alkylgruppe mit 1 bis 18 Kohlenstoffatomen, einer Cycloalkylgruppe und einer aromatischen Gruppe; und n eine Ganzzahl von 0 oder 1 oder mehr ist.

2. Kautschukzusammensetzung nach Anspruch 1, wobei A in der durch die Formel (I) dargestellten Verbindung eine Arylgruppe ist, die eine oder mehrere polare Gruppen besitzt.

3. Kautschukzusammensetzung nach Anspruch 2, wobei A in der durch die Formel (I) dargestellten Verbindung eine Arylgruppe mit zwei oder mehr polaren Gruppen ist.

4. Kautschukzusammensetzung nach einem der Ansprüche 1 bis 3, wobei mindestens eine der polaren Gruppen von A in der durch die Formel (I) dargestellten Verbindung eine Hydroxylgruppe, eine Aminogruppe oder eine Nitrogruppe ist.

5. Kautschukzusammensetzung nach Anspruch 4, wobei mindestens eine der polaren Gruppen von A in der durch die Formel (I) dargestellten Verbindung eine Hydroxylgruppe ist.

6. Kautschukzusammensetzung nach Anspruch 5, wobei mindestens zwei der polaren Gruppen von A in der durch die Formel (I) dargestellten Verbindung Hydroxylgruppen sind.

7. Kautschukzusammensetzung nach einem der Ansprüche 1 bis 6, wobei A in der durch die Formel (I) dargestellten Verbindung eine Phenylgruppe oder eine Naphthylgruppe ist.

8. Kautschukzusammensetzung nach einem der Ansprüche 1 bis 7, wobei sowohl R¹ als auch R² in der durch die Formel (I) dargestellten Verbindung Wasserstoffatome sind.

9. Kautschukzusammensetzung nach einem der Ansprüche 1 bis 8, wobei die Verbindungen, die durch die Formeln (I) und (II) dargestellt werden, beide einen Schmelzpunkt von 80 °C oder höher und niedriger als 250 °C besitzen.

10. Kautschukzusammensetzung nach einem der Ansprüche 1 bis 9, wobei ein Gesamtgehalt der durch die Formeln (I) und (II) dargestellten Verbindungen 0,05 Massenanteile bis 30 Massenanteile in Bezug auf 100 Massenanteile der Kautschukkomponente beträgt.

11. Kautschukzusammensetzung nach einem der Ansprüche 1 bis 10, wobei die durch die Formel (I) dargestellte Verbindung mindestens eine ist, ausgewählt aus der Gruppe, bestehend aus 2,6-Dihydroxybenzohydrazid, 2,3-Dihydroxybenzohydrazid, 2,4-Dihydroxybenzohydrazid und 2,5-Dihydroxybenzohydrazid ist.

12. Kautschukzusammensetzung nach einem der Ansprüche 1 bis 11, wobei die durch die Formel (II) dargestellte Verbindung mindestens eine ist, ausgewählt aus der Gruppe, bestehend aus 2,3-Dihydroxy-N'-(4-methylpentan-2-yliden)benzohydrazid, 4-Amino-3-hydroxy-N'-(4-methylpentan-2-yliden)naphthalin-2-carbohydrazid und 3-Hydroxy-N'-(4-methylpentan-2-yliden)naphthalin-2-carbohydrazid.

13. Kautschukzusammensetzung nach einem der Ansprüche 1 bis 12, wobei mindestens eines der Fettsäuremetallsalze Fettsäurezink ist.

14. Kautschukzusammensetzung nach Anspruch 13, wobei ein Gehalt des Fettsäurezinks in den Fettsäuremetallsalzen 50 Massen-% oder mehr beträgt.

15. Kautschukzusammensetzung nach einem der Ansprüche 1 bis 14, wobei ein Gehalt an den Fettsäuremetallsalzen 0,1 Massenanteile bis 5 Massenanteile in Bezug auf 100 Massenanteile der Kautschukkomponente beträgt.

16. Kautschukzusammensetzung nach einem der Ansprüche 1 bis 10 und 13 bis 15, wobei mindestens eine der durch die Formeln (I) und (II) dargestellten Verbindungen mindestens 2,6-Dihydroxybenzohydrazid und 3-Hydroxy-N'-(4-methylpentan-2-yliden)naphthalin-2-carbohydrazid enthält.

17. Reifen, der die Kautschukzusammensetzung nach einem der Ansprüche 1 bis 16 verwendet.

## Revendications

1. Composition de caoutchouc comprenant :
un constituant caoutchouc contenant un caoutchouc diénique,
une charge,
au moins un des composés représentés par les formules suivantes (I) et (II), et
une pluralité de sels métalliques d'acide gras comportant chacun un type différent de métal, dans laquelle, 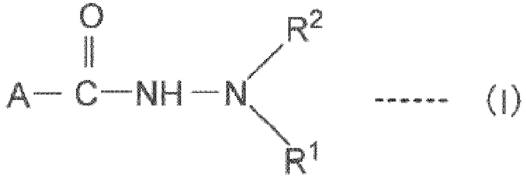
dans la formule (I), A est un groupe aryle qui peut comporter un groupe polaire, et lorsque A comporte deux groupes polaires ou plus, les groupes polaires peuvent être identiques ou différents, et R¹ et R² sont chacun au moins un substituant sélectionné indépendamment parmi le groupe constitué par un atome d'hydrogène, un groupe acyle, un groupe amido, un groupe alkyle, un groupe cycloalkyle et un groupe aryle, et le substituant peut contenir au moins un des atomes O, S et N, et 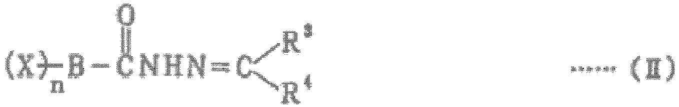
dans la formule (II), B est un groupe aryle, X est au moins un substituant sélectionné parmi le groupe constitué par un groupe hydroxyle et un groupe amino, R³ et R⁴ sont chacun au moins un sélectionné parmi le groupe constitué par un atome d'hydrogène, un groupe alkyle comportant 1 à 18 atomes de carbone, un groupe cycloalkyle et un groupe aromatique, et n est un entier de 0 ou 1 ou plus.

2. Composition de caoutchouc selon la revendication 1, dans laquelle A dans le composé représenté par la formule (I) est un groupe aryle comportant un ou plusieurs groupes polaires.

3. Composition de caoutchouc selon la revendication 2, dans laquelle A dans le composé représenté par la formule (I) est un groupe aryle comportant deux groupes polaires ou plus.

4. Composition de caoutchouc selon l'une quelconque des revendications 1 à 3, dans laquelle au moins l'un des groupes polaires de A dans le composé représenté par la formule (I) est un groupe hydroxyle, un groupe amino ou un groupe nitro.

5. Composition de caoutchouc selon la revendication 4, dans laquelle au moins l'un des groupes polaires de A dans le composé représenté par la formule (I) est un groupe hydroxyle.

6. Composition de caoutchouc selon la revendication 5, dans laquelle au moins deux des groupes polaires de A dans le composé représenté par la formule (I) sont des groupes hydroxyle.

7. Composition de caoutchouc selon l'une quelconque des revendications 1 à 6, dans laquelle A dans le composé représenté par la formule (I) est un groupe phényle ou un groupe naphtyle.

8. Composition de caoutchouc selon l'une quelconque des revendications 1 à 7, dans laquelle R¹ et R² dans le composé représenté par la formule (I) sont tous deux des atomes d'hydrogène.

9. Composition de caoutchouc selon l'une quelconque des revendications 1 à 8, dans laquelle les composés représentés par les formules (I) et (II) ont tous deux un point de fusion supérieur ou égal à 80 °C et inférieur à 250 °C.

10. Composition de caoutchouc selon l'une quelconque des revendications 1 à 9, dans laquelle une teneur totale des composés représentés par les formules (I) et (II) est de 0,05 parties en masse à 30 parties en masse rapportées à 100 parties en masse du constituant caoutchouc.

11. Composition de caoutchouc selon l'une quelconque des revendications 1 à 10, dans laquelle le composé représenté par la formule (I) est au moins un composé sélectionné parmi le groupe constitué par le 2,6-dihydroxybenzohydrazide, le 2,3-dihydroxybenzohydrazide, le 2,4-dihydroxybenzohydrazide et le 2,5-dihydroxybenzohydrazide.

12. Composition de caoutchouc selon l'une quelconque des revendications 1 à 11, dans laquelle le composé représenté par la formule (II) est au moins un composé sélectionné parmi le groupe constitué par le 2,3-dihydroxy-N'-(4-méthylpentan-2-ylidène)benzohydrazide, le 4-amino-3-hydroxy-N'-(4-méthylpentan-2-ylidène)naphtalène-2-carbohydrazide, et le 3-hydroxy-N'-(4-méthylpentan-2-ylidène)naphtalène-2-carbohydrazide.

13. Composition de caoutchouc selon l'une quelconque des revendications 1 à 12, dans laquelle au moins l'un des sels métalliques d'acide gras est un zinc d'acide gras.

14. Composition de caoutchouc selon la revendication 13, dans laquelle une teneur du zinc d'acide gras dans les sels métalliques d'acide gras est supérieure ou égale à 50 % en masse.

15. Composition de caoutchouc selon l'une quelconque des revendications 1 à 14, dans laquelle une teneur des sels métalliques d'acide gras est de 0,1 parties en masse à 5 parties en masse rapportées à 100 parties en masse du constituant caoutchouc.

16. Composition de caoutchouc selon l'une quelconque des revendications 1 à 10 et 13 à 15, dans laquelle au moins un des composés représentés par les formules (I) et (II) contient au moins du 2,6-dihydroxybenzohydrazide et du 3-hydroxy-N'-(4-méthylpentan-2-ylidène)naphtalène-2-carbohydrazide.

17. Bandage pneumatique utilisant la composition de caoutchouc selon l'une quelconque des revendications 1 à 16.
